# EUROPÄISCHE PATENTSCHRIFT

(11) **EP 2 803 841 B1**
(45) Veröffentlichungstag und Bekanntmachung des Hinweises auf die Patenterteilung: **14.09.2016**
(21) Anmeldenummer: 14151435.6
(22) Anmeldetag: 16.01.2014
(51) Int. Cl.: F02C 6/16

(54) **Druckgasspeichereinrichtung**
Pressurised gas storage device
Dispositif de stockage de gaz comprimé

(30) Priorität: 17.05.2013 DE 102013008414
(43) Veröffentlichungstag der Anmeldung: 19.11.2014
(73) Patentinhaber: RWE Deutschland AG, 45128 Essen (DE)
(72) Erfinder: Lenth, Burkhard, 44575 Castrop-Rauxel (DE); Schaarschmidt, Gunnar, 45770 Marl (DE)
(74) Vertreter: Kierdorf Ritschel Richly

(56) Entgegenhaltungen:
- WO-A2-2011/059594
- WO-A2-2013/064276
- US-A- 4 353 214

## Beschreibung

Die Erfindung betrifft eine Druckgasspeichereinrichtung umfassend wenigstens zwei Gasspeichervolumina, die an ein Gastransportnetz angeschlossen sind.

Die Erfindung betrifft insbesondere ein Gasspeicherkraftwerk.

Die Erfindung betrifft weiterhin ein Verfahren zum Betreiben eines Druckgasspeichers, insbesondere zum Betreiben eines Druckgasspeichers als Gasspeicherkraftwerk.

Speicherkraftwerke mit mehreren miteinander kommunizierenden Speichervolumina sind sowohl in Form von Wasserkraftwerken, beispielsweise als Pumpspeicherkraftwerke, als auch in Form von Druckluftspeichern bekannt.

Bei der Bereitstellung von elektrischer Energie in Stromversorgungsnetzen wird grundsätzlich zwischen einem sogenannten Grundlastbedarf und einem Spitzenlastbedarf unterschieden. Der Grundlastbedarf wird üblicherweise durch konventionelle Kraftwerke bereitgestellt, beispielsweise durch Kohlekraftwerke, Kernkraftwerke oder dergleichen. Der Spitzenlastbedarf wird in der Regel durch schnellstartfähige Systeme wie Gaskraftwerke, Pumpspeicherkraftwerke oder dergleichen bereitgestellt.

Mit einem zunehmenden Anteil von Strom aus Windkraft und Solarkraft ergibt sich ein zunehmendes Bedürfnis der Speicherung von elektrischer Energie, beispielsweise in Form von potentieller Energie, da der aus solchen Energiequellen zur Verfügung stehende Strom verhältnismäßig volatil ist.

Die bekannten Lösungen zur Speicherung elektrischer Energie in Form eines elektrischen Potentials sind nicht wirtschaftlich. Anstelle dessen erfolgt die Speicherung von elektrischer Energie in Form von potentieller Energie in Pumpspeicherkraftwerken oder Druckluftspeichern.

Pumpspeicherkraftwerke sind grundsätzlich geeignet, größere Energiemengen zu speichern und bedarfsweise bereit zu stellen. Da Pumpspeicherkraftwerke die potentielle Energie nutzen, die sich aus der Höhendifferenz zweier Becken, der einwirkenden Schwerkraft und der Masse der Arbeitsflüssigkeitswasser ergibt, die zwischen den Becken bewegt wird, erfordert deren Errichtung entsprechende topographische Gegebenheiten, die nicht in allen geographischen Breiten gegeben sind und teilweise auch bereits weitestgehend ausgenutzt sind. Darüber hinaus werden bezogen auf die speicherbare Energiemenge verhältnismäßig große Speichervolumina benötigt.

Weitere bekannte Verfahren zur Speicherung von Energie aus regenerativen Energiequellen sind beispielsweise die elektrolytische Erzeugung von Wasserstoff oder die zuvor erwähnte Verdichtung und Einspeisung von Druckluft in Druckluftspeicher. Diese Formen der Energiespeicherung sind mit einem verhältnismäßig schlechten Wirkungsgrad behaftet. Beim Verdichten der Luft wird Wärme freigesetzt, die ggf. abgeführt werden muss, beim Entspannen der Luft muss eine entsprechende Wärmemenge wieder zugeführt werden. Dieser Anteil ist von der Druckdifferenz und dem Arbeitsdruck abhängig. Darüber hinaus ist es beispielsweise erforderlich, die entspannte Luft zu entfeuchten, was ebenfalls mit einem verhältnismäßig hohen Aufwand einher geht.

Diese sogenannten CAES-Systeme (compressed air energy systems) nutzen die Druckdifferenz zwischen einem Speicher und der Atmosphäre.

Ein solches CAES-System ist beispielsweise aus der WO 2011/059594 A2 bekannt.

Ein anderes Speicherkraftwerk zur Speicherung von elektrischer Energie in Form von potentieller Energie und Druckenthalpie ist beispielsweise aus der DE 10 2011 112 113 A1 bekannt, wobei das Speicherkraftwerk wenigstens ein erstes und ein zweites Speichervolumen umfasst, wobei das erste Speichervolumen überwiegend auf einem höheren Niveau als das zweite Speichervolumen angeordnet ist, wenigstens eines der Speichervolumina zumindest teilweise mit einer Arbeitsflüssigkeit gefüllt ist, und die Speichervolumina über wenigstens eine Ausgleichsleitung miteinander kommunizieren, innerhalb welcher wenigstens eine Pumpe und/oder eine Turbine angeordnet ist, wobei das erste Speichevolumen gasdicht verschlossen und mit einem Arbeitsgas befüllt ist derart, dass dieses unter Verdichtung des Arbeitsgases mit der Arbeitsflüssigkeit befüllbar ist.

Ein solches Speicherkraftwerk ist insbesondere deshalb günstig, weil zur Unterbringung der benötigten Speichervolumina beispielsweise Grubenbaue eines Untertagebergwerks nutzbar sind.

Aus dem Dokument WO 2013/064276 A2 sind eine Einrichtung und ein Verfahren zur Energiespeicherung bekannt, wobei die Einrichtung ebenfalls als Pumpspeicherkraftwerk mit mehreren unter Tage angeordneten Speichervolumina ausgebildet ist.

Der vorliegenden Erfindung liegt die Aufgabe zugrunde, eine Druckgasspeichereinrichtung insbesondere in Form eines Gasspeicherkraftwerks sowie ein Verfahren zum Betrieb einer Druckgasspeichereinrichtung bereit zu stellen, das hinsichtlich der Nutzung der Speichervolumina verbessert ist und welches insbesondere einen geringeren Energieaufwand zur Konditionierung des zu speichernden Gases erfordert.

Die der Erfindung zugrunde liegende Aufgabe wird gelöst mit den Merkmalen der unabhängigen Ansprüche. Vorteilhafte Ausgestaltungen der Erfindung ergeben sich aus den Unteransprüchen.

Nach einem Gesichtspunkt der Erfindung ist eine Druckgasspeichereinrichtung vorgesehen, die wenigstens zwei Gasspeichervolumina umfasst, die an ein Gastransportnetz angeschlossen sind, wobei die Gasspeichervolumina über wenigstens eine erste Sammelleitung miteinander kommunizieren und über wenigstens eine zweite Sammelleitung an das Gastransportnetz angeschlossen sind, wobei die Druckgasspeichereinrichtung weiterhin wenigstens einen Verdichter, der zwischen der zweiten Sammelleitung und der ersten Sammelleitung angeordnet ist, sowie wenigstens eine Kraftmaschine und wenigstens einen Generator umfasst, wobei die Kraftmaschine zwischen der zweiten Sammelleitung und der ersten Sammelleitung angeordnet ist, wobei der Verdichter und die Kraftmaschine zwischen der zweiten Sammelleitung und der ersten Sammelleitung entgegengesetzt parallel geschaltet sind und wobei der Verdichter und die Kraftmaschine so verschaltet sind, dass das Gas zwischen den Gasspeichervolumina unter Ausnutzung eines Druckgefälles beim Betrieb des Generators und unter Erzeugung eines Druckgefälles beim Betrieb des Verdichters umschlagbar ist.

Die Erfindung kann also dahingehend zusammengefasst werden, dass eine Druckgasspeichereinrichtung mit Verdichter und wenigstens eine Kraftmaschine und mehreren Gasspeichervolumina vorgesehen ist, die so verschaltet sind, dass beispielsweise zu Schwachlastzeiten unter Aufwendung von elektrischer Energie eine Beladung und Verdichtung des Gases in einem Gasspeichervolumen unter Entladung eines weiteren Speichervolumens und gleichzeitiger Druckreduzierung in dem weiteren Speichervolumen erfolgen kann. Zu Starklastzeiten kann dann ein Druckausgleich zwischen den beiden Gasspeichervolumina erfolgen, wobei der Ausgleich des Druckgefälles zum Betrieb einer Kraftmaschine unter Einspeisung von elektrischer Energie in das Stromnetz genutzt wird.

Ein solcher Ausgleich kann dabei vorteilhafter Weise so erfolgen, dass die gesamte gespeicherte Gasmenge aller Gesamtspeichervolumina nicht notwendigerweise verändert werden muss, so dass es nicht erforderlich ist, für die erfindungsgemäße Gasspeichereinrichtung gesonderte Gasvolumina bereit zu stellen. Vielmehr können bereits vorhandene Druckgasspeicher für die Bevorratung von Erdgas/Methan genutzt werden. Hierzu ist es lediglich erforderlich, vorhandene Gasspeichervolumina entsprechend zu ertüchtigen.

Ein weiterer Vorteil einer solchen Druckgasspeichereinrichtung ist darin zu sehen, dass der Arbeitsdruck auf einem verhältnismäßig hohen Niveau, d. h. beispielsweise zwischen 70 und 200 bar gehalten werden kann. Daraus ergibt sich, dass der Bedarf an elektrischer Energie für das Aufheizen von entspanntem Gas oder für das Kühlen von verdichtetem Gas in vertretbaren Grenzen bleibt.

Die Grundidee eines solchen Gasspeicherkraftwerks besteht darin, die Kavernen großer Gasspeicher zusätzlich zur Speicherung von potentieller Energie in Form einer Druckdifferenz zu nutzen.

Sind beispielsweise zwei gleich große Gasspeichervolumina vorhanden, können diese beispielsweise bei gleicher Gasmenge jeweils halbvoll sein oder die eine voll und die andere leer. Im ersten Fall herrscht keine Druckdifferenz, was bei gegebener Gasmenge einem Energieniveau von 0 % entspricht. Der zweite Fall beschreibt die maximal mögliche technische Druckdifferenz und entspricht einem Energieniveau von 100 % potentieller Energie bei unveränderter Gasmenge.

Damit ist es grundsätzlich möglich, elektrischen Strom in Form von potentieller Energie in ohnehin vorhandenen Gasspeichern zu speichern, ohne die eingespeicherte Gasmenge antasten zu müssen.

Unter einer Kraftmaschine im Sinne der vorliegenden Erfindung ist eine Maschine zu verstehen, die eine Energieform wie potenzielle, thermische oder elektrische Energie in mechanische Energie, beispielsweise mechanische Arbeit umwandelt. Hiervon unterschieden werden im Allgemeinen sogenannte Arbeitsmaschinen als angetriebene Maschinen, die Energie in Form von mechanischer Arbeit aufnehmen. Unter einer Kraftmaschine im Sinne der vorliegenden Erfindung ist insbesondere eine Strömungsmaschine oder eine Verdrängungsmaschine zu verstehen. Ausgenommen hiervon sind sogenannte Wärmekraftmaschinen, die zur Umsetzung von potenzieller Energie in mechanische Arbeit nicht geeignet sind.

Vorzugsweise ist als Kraftmaschine eine Strömungsmaschine oder eine Verdrängermaschine ausgewählt aus einer Gruppe umfassend Kolbenmaschinen, Schraubenmaschinen und Entspannungsturbinen vorgesehen. Entspannungsturbinen im Sinne der vorliegenden Anmeldung sind solche Turbinen, die ausschließlich die Energie aus der Entspannung eines Arbeitsgases in mechanische Arbeit umsetzen, hiervon werden im Allgemeinen sogenannte Gasturbinen unterschieden, die zumindest teilweise als Wärmekraftmaschinen funktionieren.

Bei einer bevorzugten Variante der Druckgasspeichereinrichtung gemäß der Erfindung ist vorgesehen, dass die Gasspeichervolumina jeweils sowohl an die zweite Sammelleitung als auch an die erste Sammelleitung angeschlossen sind.

Zweckmäßigerweise sind die Gasspeichervolumina jeweils als Kavernenspeicher ausgebildet. Alternativ ist selbstverständlich auch die Verwendung anderer Speichervolumina möglich. Kavernenspeicher sind allerdings in ausreichender Zahl vorhanden, so dass eine verhältnismäßig einfache Ertüchtigung bestehender Kavernenspeicher zu Druckgasspeichereinrichtungen gemäß der Erfindung möglich ist.

Vorteilhafterweise sind der Verdichter und die Kraftmaschine jeweils auf einer Hochdruckseite an wenigstens einem Wärmespeicher angeschlossen. Wegen des verhältnismäßig hohen Arbeitsdrucks zwischen den Zuständen 100 % potentielle Energie und 0 % potentielle Energie, entstehen bei der Verdichtung des Druckgases, das bereits ein bestimmtes Druckniveau aufweist, verhältnismäßig geringe Temperaturen, umgekehrt entsteht bei der Entspannung des Druckgases eine verhältnismäßig geringe Temperaturabsenkung, so dass als Wärmespeicher beispielsweise ein Wärmespeicher mit Wasser als Wärmespeichermedium vorgesehen sein kann.

Da die Druckgasspeichereinrichtung gemäß der Erfindung an ein Gastransportnetz angeschlossen ist, wird das niedrigere Druckniveau in der Regel durch das Gastransportnetz vorgegeben sein und in der Größenordnung von etwa 70 bar betragen, das höhere Druckniveau wird durch die Beschaffenheit des Speichervolumens und die Verdichterleistung vorgegeben sein, dieses kann etwa 200 bar betragen, so dass das nutzbare Energiegefälle etwa einem Druckunterschied von 130 bar entspricht.

Grundsätzlich können der Verdichter und eine Kraftmaschine, die beispielsweise als Expansionsmaschine ausgebildet ist, in einem einzigen Aggregat verwirklicht sein. Darüber hinaus kann die Kraftmaschine beziehungsweise eine Expansionsmaschine und ein Generator in einem einzigen Aggregat räumlich und funktional zusammengefasst sein.

Nach einem weiteren Gesichtspunkt der vorliegenden Erfindung ist ein Verfahren zum Betreiben eines Druckgasspeichers mit wenigstens zwei Gasspeichervolumina vorgesehen, wobei die Gasspeichervolumina an ein Gastransportnetz angeschlossen sind und das Verfahren folgende Schritte umfasst:
- Einspeichern von Druckgas aus einem Gastransportnetz in wenigstens ein Gasspeichervolumen in Abhängigkeit eines jahreszeitlich bedingten Gasbedarfs und/oder
- Ausspeichern von Druckgas aus wenigstens einem Gasspeichervolumen in das Gastransportnetz in Abhängigkeit eines jahreszeitlich bedingten Gasbedarfs und/oder
- Umschlagen von Druckgas von wenigstens einem ersten Gasspeichervolumen in wenigstens ein zweites Gasspeichervolumen unter Ausnutzung eines Druckgefälles zwischen den Gasspeichervolumina unter Verwendung wenigstens einer Kraftmaschine und wenigstens eines Generators in Abhängigkeit eines tageszeitlich schwankenden Strombedarfs und/oder
- Umschlagen von Druckgas von wenigstens einem ersten Gasspeichervolumen in wenigstens ein zweites Gasspeichervolumen unter Erzeugung eines Druckgefälles und unter Verwendung wenigstens eines Verdichters in Abhängigkeit eines tageszeitlich schwankenden Strombedarfs.

Nach der Erfindung kann das Einspeichern von Druckgas aus dem Gastransportnetz einmalig erfolgen, wohingegen das Umschlagen von Druckgas von einem Gasspeichervolumen in ein weiteres Gasspeichervolumen zyklisch in Abhängigkeit eines täglich oder von Tag zu Tag schwankenden Strombedarfs erfolgt. Vorzugsweise erfolgt auch ein Ausspeichern von Druckgas nach jahreszeitlich bedingtem Gasbedarf, wobei ein solches Ausspeichern nicht zwingend erforderlich ist.

Der jahreszeitlich bedingte Gasbedarf ergibt sich durch eine jahreszeitlich bedingte Schwankung der Umgebungstemperatur, wohingegen sich der tageszeitliche Strombedarf weitestgehend aus dem Verbraucherverhalten ergibt.

Das erfindungsgemäße Verfahren ermöglicht die Überlagerung der Bevorratung von Gas beispielsweise als Heizgas und der Spitzenlaststromerzeugung unter Ausnutzung potentieller Energie oder Schwachlaststromspeicherung, wobei die ohnehin bestehenden Druckgasspeicher in Analogie zu einem Wasserpumpspeicherkraftwerk betrieben werden.

Der wesentliche Vorteil einer solchen Speicherung ist, dass das Verfahren gemäß der Erfindung ausgehend von einem verhältnismäßig hohen Grunddruckniveau betrieben werden kann, was insbesondere bei einem gasförmigen Speichermedium den Vorzug hat, dass sich geringere Temperaturdifferenzen zwischen Entspannung und Verdichtung einstellen.

Ein Gasspeichervolumen im Sinne der vorliegenden Erfindung kann jedes geeignete, dicht abschließbare und unter Druck setzbare Volumen sein. In diesem Sinne kann auch das Gastransportnetz selbst als nutzbares Gasspeichervolumen dienen.

Der Umstand, dass die Umschlagzyklen zwischen den Gasspeichervolumina weitestgehend von den durch den Gasverbrauch bedingten Bevorratungszyklen entkoppelt sind, kann dazu genutzt werden, dass aus dem Gastransportnetz kurzfristig größere Gasmengen entliehen werden können, beispielsweise außerhalb der Heizperiode, die dann kostenneutral wieder in das Gastransportnetz zurückgespeist werden können.

Erfindungsgemäß ist vorgesehen, auch beim Einspeichern in die Gasspeichervolumina oder beim Ausspeichern aus den Gasspeichervolumina jeweils ein Druckgefälle zwischen den Gasspeichervolumina zu erzeugen. Hierzu ist vorgesehen, dass die Gasspeichervolumina entgegen der üblichen Praxis beim Einspeichern oder Ausspeichern seriell entleert oder befüllt werden. Insbesondere wenn als Gasvolumina Kavernenspeicher verwendet werden, werden die Gasvolumina zweckmäßigerweise mit einem Mindestfülldruck von 10 bar, vorzugsweise von 30 bar bis 50 bar und/oder einem Maximalfülldruck von 300 bar, vorzugsweise von 200 bar bis 220 bar betrieben.

Als Druckgas findet vorzugsweise Methan oder ein anderes Brenngas Anwendung.

Wie eingangs bereits erwähnt, ist bevorzugt vorgesehen, das Verfahren unter Verwendung einer Kavernenspeicheranordnung durchzuführen.

Dabei ist es durchaus möglich und sinnvoll, mehr als zwei Speichervolumina zu nutzen.

Zweckmäßigerweise wird das Druckgas nach der Verdichtung gekühlt und vor einer Entspannung erwärmt.

Dies kann vorteilhafterweise unter Verwendung wenigstens eines mit Wasser als Wärmeträgermedium betriebenen Wärmespeichers erfolgen.

Da gemäß der Erfindung die Nutzung der Druckdifferenz zwischen den Gasvolumina oder die Erzeugung der Druckdifferenz zwischen den Gasvolumina zyklisch im Tagesverlauf erfolgt und die Temperaturdifferenzen zwischen den verschiedenen Zuständen des Druckgases verhältnismäßig moderat sind, ist es möglich, Wasser als Wärmeträger zu nutzen. Selbstverständlich können auch andere regenerative Wärmetauscher verwendet werden.

Die Erfindung wird nachstehend anhand eines in den Zeichnungen dargestellten Ausführungsbeispiels erläutert.

### Es zeigen:

- Figur 1:: eine Druckgasspeichereinrichtung nach dem Stand der Technik,
- Figur 2:: zwei Schaltbilder, die grundsätzlich das Verfahren gemäß der Erfindung veranschaulichen,
- Figur 3:: eine Druckgasspeichereinrichtung gemäß der vorliegenden Erfindung,
- Figur 4:: eine Veranschaulichung des Gasumschlags innerhalb der Druckgasspeichereinrichtung gemäß Figur 3 unter Nutzung des in den Gasspeichervolumina vorhandenen Gases,
- Figur 5:: eine der Figur 4 entsprechende Ansicht der Druckgasspeichereinrichtung bei der Stromerzeugung aus der Druckdifferenz zwischen den Gasspeichervolumina,
- Figur 6:: eine Ansicht der Druckgasspeichereinrichtung bei der Gaseinspeicherung und Stromerzeugung aus einer Druckdifferenz zwischen den Gasspeichervolumina und dem Gastransportnetz,
- Figur 7:: die Druckgasspeichereinrichtung gemäß der Erfindung bei der Gaseinspeicherung unter Erzeugung einer Druckdifferenz zwischen den Kavernen und
- Figur 8:: die Druckgasspeichereinrichtung gemäß der Erfindung bei der Gasausspeicherung.

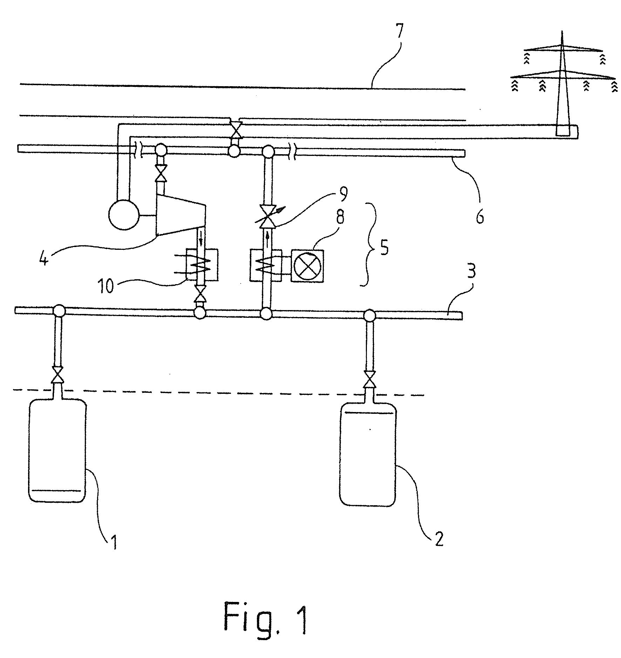

Es wird zunächst Bezug genommen auf die Figur 1, die einen Druckgasspeicher gemäß Stand der Technik veranschaulicht. Der Druckgasspeicher nach dem Stand der Technik umfasst eine erste Kaverne 1 und eine zweite Kaverne 2, die jeweils über eine erste Sammelleitung 3 miteinander verbunden sind. An die erste Sammelleitung 3 sind jeweils ein Verdichter 4 und eine Gasdruckregeleinrichtung 5 angeschlossen. Der Verdichter 4 und die Gasdruckregeleinrichtung 5 sind über eine zweite Sammelleitung 6 an ein Gastransportnetz 7 angeschlossen.

Das Gastransportnetz 7 ist in diesem Fall ein Brenngastransportnetz zum Transport von Methan bei einem Druck von etwa 70 bar und einer Temperatur von etwa 15°C. Bei einer solchen Druckgasspeichereinrichtung werden üblicherweise die Kavernen, 1, 2 während der Heizperiode entleert, wobei das in diesen zwischengespeicherte Methan über eine Heizeinrichtung 8 vorgewärmt und über ein Regelventil 9 auf den Druck des Gastransportnetzes 7 entspannt wird. Die Heizeinrichtung 8 und das Regelventil 9 sind Teil der zuvor erwähnten Gasdruckregeleinrichtung 5. Über die zweite Sammelleitung 6 wird das entspannte Methan in das Gastransportnetz 7 eingespeist, wobei die zweite Sammelleitung 6 gegebenenfalls mehrere Gasspeicher miteinander verbindet.

Außerhalb der Heizperiode wird mehr oder weniger kontinuierlich aus dem Gastransportnetz 7 Methan entnommen, über die zweite Sammelleitung 6 dem Verdichter 4 zugeführt, auf den Speicherdruck zwischen 70 und etwa 200 bar verdichtet und mittels eines Kühlers 10 auf die Speichertemperatur von etwa 40°C heruntergekühlt der ersten Sammelleitung 3 zugeführt. Üblicherweise werden die erste Kaverne 1 und die zweite Kaverne 2 dabei parallel mit aus dem Gastransportnetz 7 entnommenen Methan beschickt.

Die Erfindung macht sich diese Grundstruktur nunmehr zu nutze.

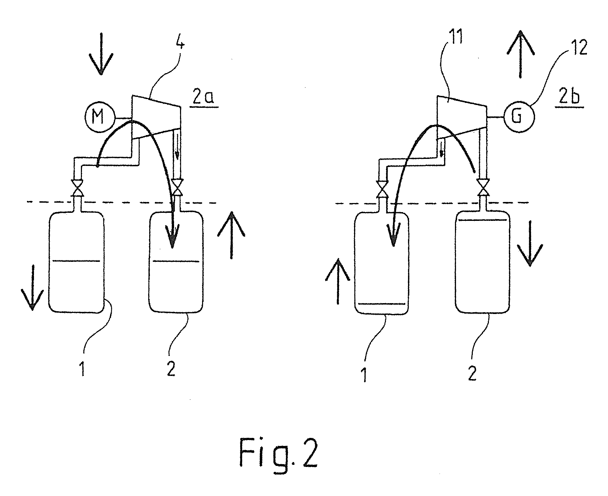

In Figur 2 ist das erfindungsgemäße Verfahrensprinzip anhand zweier verschiedener Zustände der Kavernen 1, 2 veranschaulicht.

Bei dem in Figur 2a dargestellten Zustand sind sowohl die erste Kaverne 1 als auch die zweite Kaverne 2 halb mit Methan befüllt, wobei der Fülldruck jeweils 135 bar beträgt. Die Druckdifferenz zwischen der ersten Kaverne 1 und der zweiten Kaverne 2 ist Null, entsprechend einem Energieniveau von 0 %.

Zu Schwachlastzeiten wird nun mittels des Verdichters 4 (gleiche Bauteile sind in allen Ausführungsbeispielen mit gleichen Bezugszeichen versehen) Methan aus der ersten Kaverne 1 in die zweite Kaverne 2 umgeschlagen und zwar solange, bis der in Figur 2b gezeigte Zustand erreicht ist und die erste Kaverne 1 ein Druckniveau von 70 bar aufweist und die zweite Kaverne 2 ein Druckniveau von 200 bar aufweist. Ein Druck von 200 bar entspricht dem Vollzustand der zweiten Kaverne 2, 70 bar entsprechen etwa dem Leerzustand der ersten Kaverne 1. An dieser Stelle sei angemerkt, dass die erste Kaverne 1 nicht unter 70 bar entleert wird, da das Druckniveau des Gastransportnetzes 7 etwa 70 bar beträgt.

Der technisch bedingte Minimaldruck der Kaverne 1 beträgt etwa 30 bis 50 bar.

Die Verdichtung und das Umschlagen des Methans von der ersten Kaverne 1 in die zweite Kaverne 2 erfolgt unter Aufwendung elektrischer Energie aus dem Stromnetz.

Ist der in Figur 2b erreichte Zustand erreicht, kann das in der zweiten Kaverne 2 vorhandene Methan von dem Druckniveau 200 bar zurück auf das Druckniveau 135 bar entspannt werden, unter Ausnutzung des Druckgefälles zwischen der ersten Kaverne 1 und der zweiten Kaverne 2. Hierzu wird das Methan aus der zweiten Kaverne 2 über eine Kraftmaschine in Form einer in die erste Kaverne 1 eingeströmt. Die Entspannungsturbine 11 treibt wiederum einen Generator 12, der elektrische Energie erzeugt und diese in das Stromnetz einspeist. Dieser Vorgang erfolgt zu Spitzenlastzeiten, wohingegen das Erzeugen der Druckdifferenz und mithin die Entnahme elektrischer Energie aus dem Stromnetz zu Schwachlastzeiten erfolgt.

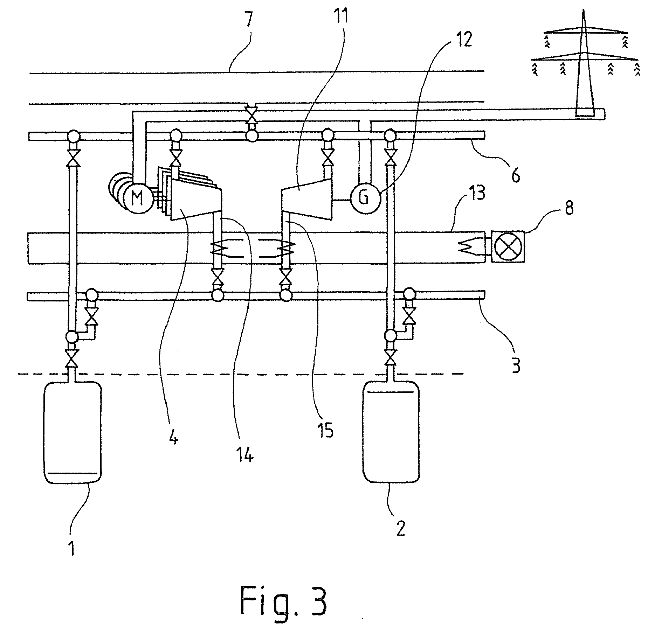

Im Folgenden wird das erfindungsgemäße Verfahren anhand des in der Figur 3 dargestellten prinzipiellen Aufbaus der Druckgasspeichereinrichtung gemäß der Erfindung erläutert.

Die Druckgasspeichereinrichtung gemäß der Erfindung umfasst wenigstens eine erste Speicherkaverne 1 und eine zweite Speicherkaverne 2, die jeweils sowohl an eine erste Sammelleitung 3, als auch an eine zweite Sammelleitung 6 angeschlossen sind. Die zweite Sammelleitung 6 ist wiederum an ein Gastransportnetz 7 angeschlossen. Zwischen der zweiten Sammelleitung 6 und der ersten Sammelleitung 3 sind mehrere Verdichter 4 sowie wenigstens eine Entspannungsturbine 11 entgegengesetzt parallel geschaltet angeordnet. Die zweite Sammelleitung 6 stellt die Niederdruckseite mit einem Druckniveau von etwa 70 bar dar, wohingegen die erste Sammelleitung 3 die Hochdruckseite mit einem Druckniveau von bis zu 200 bar darstellt. Wie vorstehend bereits erwähnt, sind die jeweils die erste und die zweite Kaverne 1 und 2 jeweils an die zweite Sammelleitung 6 und an die erste Sammelleitung 3 angeschlossen. Die entsprechenden Leitungsabzweigungen sind jeweils mit nicht näher bezeichneten Ventilen absperrbar, so dass verschiedene Schaltungsanordnungen realisierbar sind.

Zwischen der zweiten Sammelleitung 6 auf der Niederdruckseite und der ersten Sammelleitung auf der Hochdruckseite ist ein Wärmespeicher 13 angeordnet.

Wenigstens ein Verdichterabgang 14 sowie wenigstens ein Turbinenzulauf 15 sind thermisch mit dem Wärmespeicher 13 gekoppelt.

In dem in Figur 3 dargestellten Zustand der Druckgasspeichereinrichtung ist die erste Kaverne 1 mit einer Mindestfüllung versehen und die zweite Kaverne 2 mit einer Maximalfüllung. Die Mindestfüllung entspricht einem Druckniveau von 70 bar bei etwa 40°C und die Maximalfüllung einem Druck von 200 bar bei etwa gleicher Temperatur.

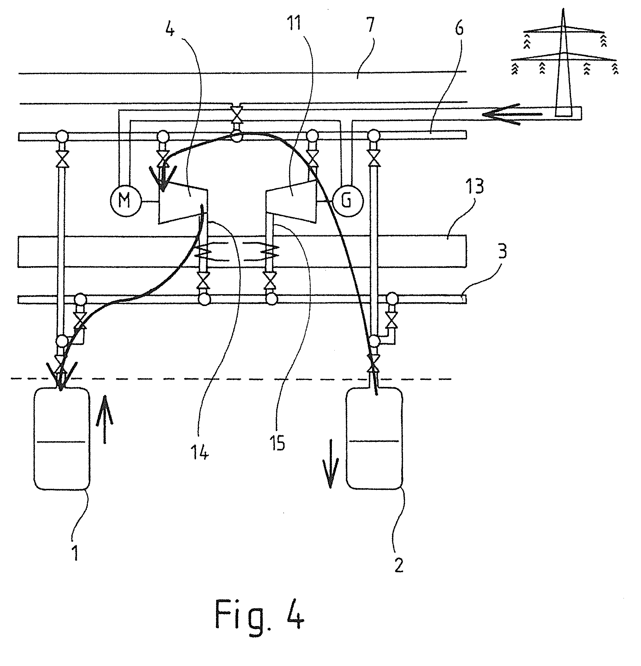

Figur 4 veranschaulicht den Gasumschlag zwischen den Gasspeichervolumina, das heißt, zwischen der ersten Kaverne 1 und der zweiten Kaverne 2 ausgehend von gleichem Druckniveau in der ersten Kaverne 1 und der zweiten Kaverne 2. Gleiches Druckniveau bedeutet in diesem Falle, dass beide Kavernen 1, 2 den gleichen Füllstand haben. Ausgehend von diesem Zustand wird nun Gas aus der zweiten Kaverne 2 entnommen und über die zweite Sammelleitung 6 einem Verdichter 4 zugeführt. Dort wird das Gas auf einen Druck bis 200 bar verdichtet. Mit diesem Druck wird die erste Kaverne 1 über die erste Sammelleitung 3 beladen, bis der Gasdruck in der ersten Kaverne 1 etwa 200 bar entspricht und der Gasdruck in der zweiten Kaverne 2 etwa 70 bar entspricht. Bei der Verdichtung mittels des Verdichters fällt Wärme an, die dem mit Wasser als Wärmeträgermedium gefüllten Wärmespeicher 13 aufgegeben wird. Darüber hinaus wird bei der Verdichtung elektrische Energie benötigt, die dem Stromnetz entnommen wird. Dieser Vorgang erfolgt zu Schwachlastzeiten, wobei die gespeicherte Gasmenge unverändert bleibt.

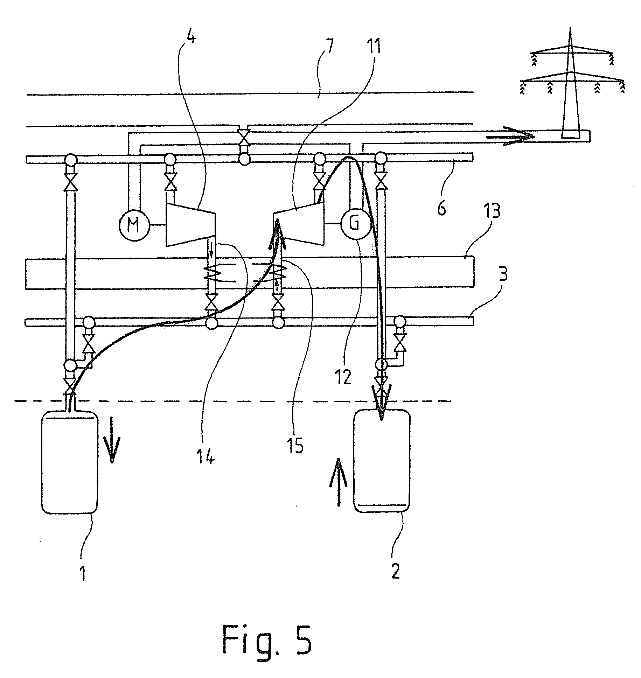

Figur 5 veranschaulicht den Gasumschlag zwischen der ersten Kaverne 1 und der zweiten Kaverne 2 unter Absenkung des Druckniveaus in der ersten Kaverne 1 zugunsten des Drucks in der zweiten Kaverne 2, wobei die Druckdifferenz zwischen der ersten und der zweiten Kaverne 2 zur Stromerzeugung genutzt wird. Hierzu wird der Druck in der ersten Kaverne 1 von 200 bar durch Umschlagen des Gases über die erste Sammelleitung 3 und die Entspannungsturbine 11 solange mit der zweiten Kaverne 2 ausgeglichen, bis das Druckniveau etwa 135 bar beträgt. Das Methan wird in der Entspannungsturbine 11 unter Betrieb des Generators 12 entspannt und über die zweite Sammelleitung 6 der zweiten Kaverne 2 zugeführt. Dabei wird das aus der ersten Kaverne 1 austretende Gas im Turbinenzulauf 15 mit der in dem Wärmespeicher 13 gespeicherten Wärme vorgewärmt. Dabei wird dem Wärmespeicher 13 die bei der Einspeicherung eingetragene Wärme wieder entzogen. Über den Generator 12 wird bei diesem Vorgang elektrische Energie erzeugt und in das Stromnetz eingespeist. Dieser Vorgang erfolgt bevorzugt zu Spitzenlastzeiten.

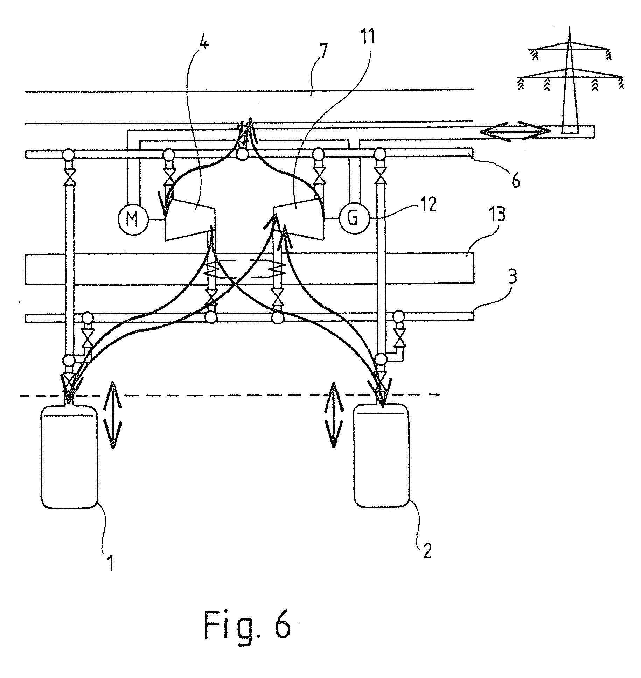

Figur 6 veranschaulicht einen Zustand der Druckgasspeichereinrichtung, bei welcher aus Bevorratungsgründen sowohl die erste Kaverne 1 als auch die zweite Kaverne 2 gefüllt sind. Bei einem solchen Zustand kann eine Stromerzeugung aus der Druckdifferenz zwischen beiden Kavernen 1 und 2 in Bezug auf weitere Kavernen oder unter Nutzung des Gastransportnetzes 7 als Gasspeichervolumen erfolgen. Die in der Figur dargestellten Pfeile veranschaulichen das Ausspeisen von Methan aus der ersten und zweiten Kaverne 1, 2 parallel über die Entspannungsturbine 11 in das Gastransportnetz 7 sowie das Einspeisen von Methan über die zweite Sammelleitung 6 mittels der Verdichter 4 in beide Kavernen 1, 2 parallel. Im ersten Fall erfolgt eine Vorwärmung des der Entspannungsturbine 11 zugeführten Gases über den Wärmespeicher 13 unter Entnahme von Wärme, im letzteren Fall wird der Wärmespeicher 13 im Wärmetausch mit dem verdichteten Methan beladen.

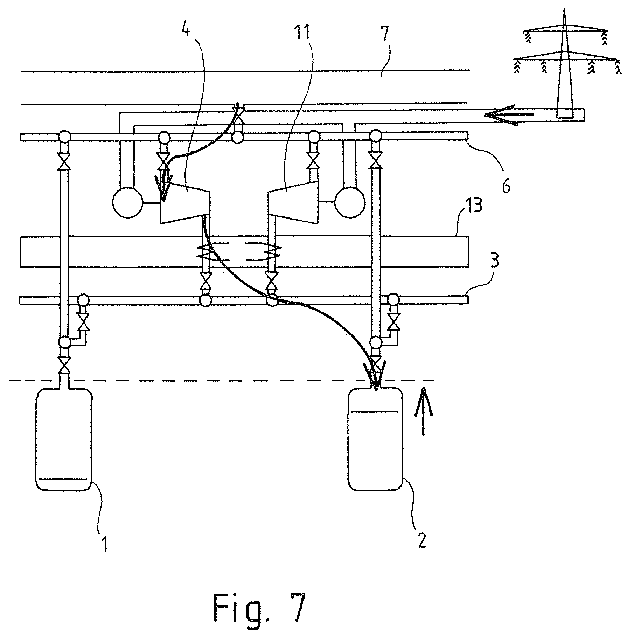

Bei der in Figur 7 veranschaulichten Variante des Verfahrens wird die zweite Kaverne 2 aus dem Gastransportnetz 7 beladen, wobei die Figur die Gaseinspeicherung unter Zuhilfenahme des Verdichters 4 veranschaulicht. Die erste Kaverne 1 wird nicht gefüllt und verbleibt auf dem Druckniveau von etwa 70 bar. Zwischen der zweiten Kaverne 2 und der ersten Kaverne 1 vergrößert sich somit die Druckdifferenz. Der Verdichter 4 nimmt zur Einspeicherung derselben Menge mehr elektrische Energie auf als bei paralleler Befüllung beider Kavernen 1, 2 auf ausgeglichenem Druckniveau. Eine solche Verfahrungsvariante kann bei einer Überlagerung einer saisonalen Gaseinspeicherung mit einer Speicherung von elektrischer Energie in Form von potentieller Energie sinnvoll sein.

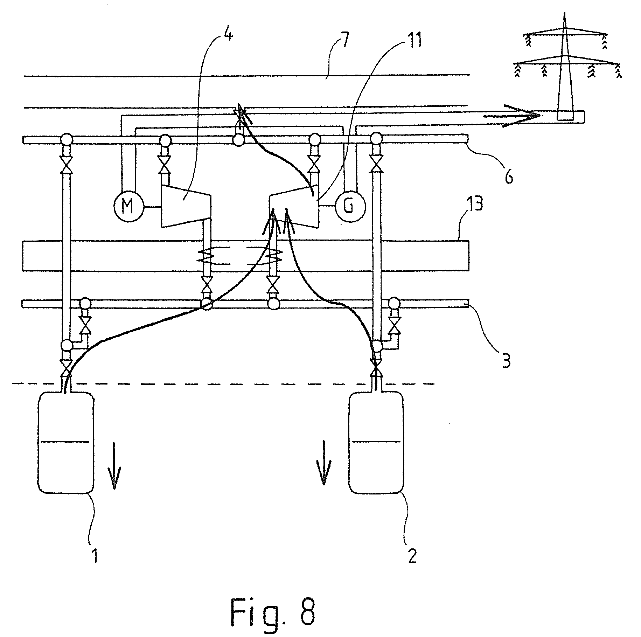

Figur 8 veranschaulicht schließlich eine Variante des Verfahrens gemäß der Erfindung, bei welcher eine Gasausspeicherung aus beiden Kavernen 1, 2 unter Reduzierung des Drucks in beiden Kavernen 1, 2 gleichzeitig unter Vermeidung einer Druckdifferenz zwischen den Kavernen erfolgt, und zwar über die Entspannungsturbine 11 unter Vorwärmung des Gases bei gleichzeitigem Entzug von Wärme aus dem Wärmespeicher 13. In diesem Falle werden bei hohem Strompreis sowohl Gas ausgespeichert als auch Strom in das Stromnetz eingespeist. Die Entspannungsturbine 11 gibt zur Ausspeicherung derselben Gasmenge mehr elektrische Energie ab als bei asymmetrischer Entleerung beider Kavernen mit Druckdifferenz. Diese Variante des Verfahrens stellt die Überlagerung der saisonalen Gasausspeicherung und der in Figur 5 dargestellten Ausspeicherung elektrischer Energie dar.

### Bezugszeichenliste:

- 1: erste Kaverne
- 2: zweite Kaverne
- 3: erste Sammelleitung
- 4: Verdichter mit elektrischem Antrieb
- 5: Gasdruckregeleinrichtung
- 6: zweite Sammelleitung
- 7: Gastransportnetz
- 8: Heizeinrichtung
- 9: Regelventil
- 10: Kühler
- 11: Entspannungsturbine
- 12: Generator
- 13: Wärmespeicher
- 14: Verdichterabgang
- 15: Turbinenzulauf

## Patentansprüche

1. Druckgasspeichereinrichtung umfassend wenigstens zwei Gasspeichervolumina, die an ein Gastransportnetz (7) angeschlossen sind, wobei die Gasspeichervolumina über wenigstens eine erste Sammelleitung (3) miteinander kommunizieren und über wenigstens eine zweite Sammelleitung (6) an das Gastransportnetz (7) angeschlossen sind, weiterhin umfassend wenigstens einen Verdichter (4), der zwischen der zweiten Sammelleitung (6) und der ersten Sammelleitung (3) angeordnet ist, sowie wenigstens eine Kraftmaschine und wenigstens einen Generator (12), wobei wenigstens die Kraftmaschine zwischen der zweiten Sammelleitung (6) und der ersten Sammelleitung (3) angeordnet ist, wobei der Verdichter (4) und die Kraftmaschine zwischen der zweiten Sammelleitung (6) und der ersten Sammelleitung (3) entgegengesetzt parallel geschaltet sind und wobei der Verdichter (4) und die Kraftmaschine so verschaltet sind, dass Gas zwischen den Gasspeichervolumina unter Ausnutzung eines Druckgefälles bei Betrieb des Generators (12) oder unter Erzeugung eines Druckgefälles bei Betrieb des Verdichters (4) umschlagbar ist.

2. Druckgasspeichereinrichtung nach Anspruch 1, **dadurch gekennzeichnet, dass** als Kraftmaschine eine Strömungsmaschine oder einer Verdrängermaschine ausgewählt aus einer Gruppe umfassend Entspannungsturbinen, Kolbenmaschinen, Schraubenmaschinen vorgesehen ist.

3. Druckgasspeichereinrichtung nach Anspruch 1 oder 2, **dadurch gekennzeichnet, dass** die Gasspeichervolumina jeweils sowohl an die zweite Sammelleitung (6) als auch an die erste Sammelleitung (3) angeschlossen sind.

4. Druckgasspeichereinrichtung nach einem der Ansprüche 1 bis 3, **dadurch gekennzeichnet, dass** die Gasspeichervolumina jeweils als Kavernenspeicher ausgebildet sind.

5. Druckgasspeichereinrichtung nach einem der Ansprüche 1 bis 4, **dadurch gekennzeichnet, dass** der Verdichter (4) und die Kraftmaschine jeweils auf einer Hochdruckseite an wenigstens einen Wärmespeicher (13) angeschlossen sind.

6. Druckgasspeichereinrichtung nach Anspruch 5, **dadurch gekennzeichnet, dass** der Wärmespeicher (13) mit Wasser als Wärmeträgermedium ausgebildet ist.

7. Verfahren zum Betreiben eines Druckgasspeichers mit wenigstens zwei Gasspeichervolumina, nach einem der Ansprüche 1 bis 6, wobei die Gasspeichervolumina an ein Gastransportnetz (7) angeschlossen sind und das Verfahren folgende Schritte umfasst:
- Einspeichern von Druckgas aus einem Gastransportnetz in wenigstens ein Gasspeichervolumen in Abhängigkeit eines jahreszeitlich bedingten Gasbedarfs und/oder
- Ausspeichern von Druckgas aus wenigstens einem Gasspeichervolumen in das Gastransportnetz in Abhängigkeit eines jahreszeitlich bedingten Gasbedarfs und/oder
- Umschlagen von Druckgas von wenigstens einem ersten Gasspeichervolumen in wenigstens ein zweites Gasspeichervolumen unter Ausnutzung eines Druckgefälles zwischen den Gasspeichervolumina unter Verwendung wenigstens einer Kraftmaschine und wenigstens eines Generators in Abhängigkeit eines tageszeitlich schwankenden Strombedarfs und/oder
- Umschlagen von Druckgas von wenigstens einem ersten Gasspeichervolumen in wenigstens ein zweites Gasspeichervolumen unter Erzeugung eines Druckgefälles und unter Verwendung wenigstens eines Verdichters in Abhängigkeit eines tageszeitlich schwankenden Strombedarfs, wobei beim Einspeichern in die Gasspeichervolumina oder beim Ausspeichern aus den Gasspeichervolumina jeweils ein Druckgefälle zwischen den Gasspeichervolumina erzeugt wird und wobei die Gasspeichervolumina beim Einspeichern oder Ausspeichern seriell entleert oder befüllt werden

8. Verfahren nach Anspruch 7, **dadurch gekennzeichnet, dass** die Gasvolumina mit einem Mindestfülldruck von 10 bar, vorzugsweise von 30 bis 50 bar und/oder einem Maximalfülldruck von 300 bar, vorzugsweise von 200 bar bis 220 bar betrieben werden.

9. Verfahren nach einem der Ansprüche 7 oder 8, **dadurch gekennzeichnet, dass** als Druckgas Methan Anwendung findet.

10. Verfahren nach einem der Ansprüche 7 bis,9, **dadurch gekennzeichnet, dass** es unter Verwendung einer Kavernenspeicheranordnung durchgeführt wird.

11. Verfahren nach einem der Ansprüche 7 bis 10 **dadurch gekennzeichnet, dass** das Druckgas nach der Verdichtung gekühlt wird und vor der Entspannung erwärmt wird.

12. Verfahren nach Anspruch 11, **dadurch gekennzeichnet, dass** das Kühlen und das Erwärmen unter Verwendung eines mit Wasser als Wärmeträgermedium betriebenen Wärmespeichers erfolgt.

## Claims

1. Pressurized gas storage device comprising at least two gas storage volumes that are connected to a gas transport grid (7), wherein the gas storage volumes communicate with one another via at least one first collection line (3) and are connected to the gas transport grid (7) via at least one second collection line (6), further comprising at least one compressor (4) that is arranged between the second collection line (6) and the first collection line (3), and at least one power machine and at least one generator (12), wherein at least the power machine is arranged between the second collection line (6) and the first collection line (3), wherein the compressor (4) and the power machine are connected in parallel and counter to one another between the second collection line (6) and the first collection line (3), and wherein the compressor (4) and the power machine are connected such that gas can be transferred between the gas storage volumes, either using a pressure gradient in the case of operation of the generator (12) or generating a pressure gradient in the case of operation of the compressor (4).

2. Pressurized gas storage device according to Claim 1, **characterized in that** a turbomachine or a displacement machine chosen from a group comprising expansion turbines, piston machines, screw machines is provided as the power machine.

3. Pressurized gas storage device according to Claim 1 or 2, **characterized in that** the gas storage volumes are each connected both to the second collection line (6) and to the first collection line (3).

4. Pressurized gas storage device according to one of Claims 1 to 3, **characterized in that** the gas storage volumes are each designed as cavern stores.

5. Pressurized gas storage device according to one of Claims 1 to 4, **characterized in that** the compressor (4) and the power machine are each connected, on a high-pressure side, to at least one heat store (13).

6. Pressurized gas storage device according to Claim 5, **characterized in that** the heat store (13) is designed with water as the heat transfer medium.

7. Method for operating a pressurized gas storage device having at least two gas storage volumes, according to one of Claims 1 to 6, wherein the gas storage volumes are connected to a gas transport grid (7) and the method comprises the following steps:
- feeding compressed gas from a gas transport grid into at least one gas storage volume in dependence on a demand for gas linked to the time of year, and/or
- discharging compressed gas from at least one gas storage volume into the gas transport grid in dependence on a demand for gas linked to the time of year, and/or
- transferring compressed gas from at least one first gas storage volume into at least one second gas storage volume, using a pressure gradient between the gas storage volumes using at least one power machine and at least one generator in dependence on a demand for electricity that varies with the time of day, and/or
- transferring compressed gas from at least one first gas storage volume into at least one second gas storage volume, generating a pressure gradient and using at least one compressor in dependence on a demand for electricity that varies with the time of day, wherein, when feeding into the gas storage volumes or when discharging from the gas storage volumes, a pressure gradient is in each case generated between the gas storage volumes, and wherein the gas storage volumes are emptied or filled in series when feeding-in or discharging.

8. Method according to Claim 7, **characterized in that** the gas volumes are operated with a minimum filling pressure of 10 bar, preferably of 30 to 50 bar and/or a maximum filling pressure of 300 bar, preferably of 200 bar to 220 bar.

9. Method according to either of Claims 7 and 8, **characterized in that** methane is used as the compressed gas.

10. Method according to one of Claims 7 to 9, **characterized in that** it is carried out using a cavern store arrangement.

11. Method according to one of Claims 7 to 10, **characterized in that** the compressed gas is cooled after compression and is heated prior to expansion.

12. Method according to Claim 11, **characterized in that** cooling and heating are carried out using a heat store operated with water as the heat transfer medium.

## Revendications

1. Dispositif d'accumulation de gaz comprimé comprenant au moins deux volumes d'accumulation de gaz, lesquels sont raccordés à un réseau de transport de gaz (7), les volumes d'accumulation de gaz communiquant l'un avec l'autre par le biais d'au moins une première conduite collectrice (3) et étant raccordés au réseau de transport de gaz (7) par le biais d'au moins une deuxième conduite collectrice (6), comprenant en outre au moins un compresseur (4) qui est disposé entre la deuxième conduite collectrice (6) et la première conduite collectrice (3), ainsi qu'au moins une machine motrice et au moins un générateur (12), au moins la machine motrice étant disposée entre la deuxième conduite collectrice (6) et la première conduite collectrice (3), le compresseur (4) et la machine motrice étant branchés en parallèle en tête-bêche entre la deuxième conduite collectrice (6) et la première conduite collectrice (3) et le compresseur (4) et la machine motrice étant interconnectés de telle sorte que du gaz peut être transféré entre les volumes d'accumulation de gaz en utilisant une chute de pression lors du fonctionnement du générateur (12) ou en générant une chute de pression lors du fonctionnement du compresseur (4).

2. Dispositif d'accumulation de gaz comprimé selon la revendication 1, **caractérisé en ce que** la machine motrice présente est une turbomachine ou une machine volumétrique choisie dans un groupe comprenant des turbines de détente, des machines à piston, des machines à vis sans fin.

3. Dispositif d'accumulation de gaz comprimé selon la revendication 1 ou 2, **caractérisé en ce que** les volumes d'accumulation de gaz sont respectivement raccordés à la fois à la deuxième conduite collectrice (6) et à la première conduite collectrice (3).

4. Dispositif d'accumulation de gaz comprimé selon l'une des revendications 1 à 3, **caractérisé en ce que** les volumes d'accumulation de gaz sont respectivement réalisés sous la forme d'accumulateurs souterrains.

5. Dispositif d'accumulation de gaz comprimé selon l'une des revendications 1 à 4, **caractérisé en ce que** le compresseur (4) et la machine motrice sont respectivement raccordés d'un côté haute pression à au moins un accumulateur de chaleur (13).

6. Dispositif d'accumulation de gaz comprimé selon la revendication 5, **caractérisé en ce que** l'accumulateur de chaleur (13) est réalisé avec de l'eau en tant que fluide caloporteur.

7. Procédé pour faire fonctionner un accumulateur de gaz comprimé comprenant au moins deux volumes d'accumulation de gaz, selon l'une des revendications 1 à 6, les volumes d'accumulation de gaz étant raccordés à un réseau de transport de gaz (7) et le procédé comprenant les étapes suivantes :
- accumulation de gaz comprimé en provenance d'un réseau de transport de gaz dans au moins un volume d'accumulation de gaz en fonction d'un besoin en gaz saisonnier et/ou
- décharge de gaz comprimé depuis au moins un volume d'accumulation de gaz dans le réseau de transport de gaz en fonction d'un besoin en gaz saisonnier et/ou
- transfert de gaz comprimé d'au moins un premier volume d'accumulation de gaz dans au moins un deuxième volume d'accumulation de gaz en utilisant la chute de pression entre les volumes d'accumulation de gaz en utilisant au moins une machine motrice et au moins un générateur en fonction d'un besoin en électricité à fluctuation horaire et/ou
- transfert de gaz comprimé d'au moins un premier volume d'accumulation de gaz dans au moins un deuxième volume d'accumulation de gaz en générant une chute de pression et en utilisant au moins un compresseur en fonction d'un besoin en électricité à fluctuation horaire, une chute de pression entre les volumes d'accumulation de gaz étant à chaque fois générée lors de l'accumulation dans les volumes d'accumulation de gaz ou lors de la décharge hors des volumes d'accumulation de gaz, et les volumes d'accumulation de gaz étant vidés ou remplis en série lors de l'accumulation ou de la décharge.

8. Procédé selon la revendication 7, **caractérisé en ce que** les volumes de gaz fonctionnent avec une pression de remplissage minimale de 10 bar, de préférence de 30 à 50 bar et/ou avec une pression de remplissage maximale de 300 bar, de préférence de 200 bar à 220 bar.

9. Procédé selon l'une des revendications 7 ou 8, **caractérisé en ce que** le gaz comprimé utilisé est du méthane.

10. Procédé selon l'une des revendications 7 à 9, **caractérisé en ce qu'**il est mis en oeuvre en utilisant un arrangement d'accumulation souterrain.

11. Procédé selon l'une des revendications 7 à 10, **caractérisé en ce que** le gaz comprimé est refroidi après la compression et chauffé avant la détente.

12. Procédé selon la revendication 11, **caractérisé en ce que** le refroidissement et le chauffage s'effectuent en utilisant un accumulateur de chaleur fonctionnant avec de l'eau en tant que fluide caloporteur.
